# EUROPÄISCHE PATENTSCHRIFT

(11) **EP 0 515 959 B1**
(45) Veröffentlichungstag und Bekanntmachung des Hinweises auf die Patenterteilung: **27.03.1996**
(21) Anmeldenummer: 92108470.3
(22) Anmeldetag: 20.05.1992
(51) Int. Cl.: A01K 1/015, B01J 20/28, B01J 20/24

(54) **Granulat sowie Verfahren zu seiner Herstellung**
Granules and process or obtaining them
Granulés et procédé pour les obtenir

(30) Priorität: 23.05.1991 DE 4116861
(43) Veröffentlichungstag der Anmeldung: 02.12.1992
(73) Patentinhaber: HARD AG, CH-8604 Volketswil (CH)
(72) Erfinder: Frey, Alfred, CH-1470 Estavayer-le-Lac (CH)
(74) Vertreter: Troesch Scheidegger Werner AG

(56) Entgegenhaltungen:
- EP-A- 0 447 366
- DE-A- 3 514 806
- DE-A- 3 644 826
- GB-A- 2 136 263

## Beschreibung

Die Erfindung betrifft ein Granulat nach dem Oberbegriff des Anspruchs 1, dessen Verwendung als Tierstreugranulat bzw. als Oelabsorbergranulat beansprucht ist, und ein Verfahren zur Herstellung des Granulates entsprechend dem Oberbegriff des Anspruchs 12.

Bei einem aus der DE-37 07 473 A1 bekannten Verfahren zur Granulatherstellung wird Abfall aus der Papierfertigung eingeweicht und der so hergestellte Papierbrei durch Pressen oder Zentrifugieren entwässert, woraufhin die Masse zerkleinert wird. Nach Zusatz geringer Mengen von Additiven, insbesondere Farbstoffen, Bioziden oder dgl. werden mittels eines Trommel- oder Scheiben-Tablettenformers, Extruders oder Granulators, kugelförmige Körnchen geformt die anschliessend abgeplattet werden. Das getrocknete Produkt ergibt ein Granulat das auch als Tierstreugranulat verwendbar ist. Da aus Papierfasern hergestellte Granulate in ihrer Form sehr unregelmässig und auch an ihrer Oberfläche filzig bzw. fasrig sind, werden sie wie erwähnt abgeplattet, wodurch sie aber an Saugfähigkeit verlieren und womit, insbesondere unter dem Einfluss von Feuchtigkeit, z.B. beim Lagern, ein filziges Aneinanderhaften kaum vermieden werden kann.

Diesem Nachteil wurde mit Verfahren gemäss EP-A-0 447 366, DE-A-3 644 826, GB-A-2 136 263 und DE-A-35 14 806 begegnet, indem den Zellulosefasern vor dem Granulieren Bindemittel, insbesondere hydraulische Bindemittel, beigemischt wurden. Dadurch konnte mit mehr oder weniger Erfolg eine nichtfilzende Oberfläche erzielt werden. Insbesondere bedingt aber das Kompaktieren nur an der Oberfläche nach EP-A-0 447 366 besondere Aufmerksamkeit und Fertigkeit.

Der vorliegenden Erfindung liegt nun die Aufgabe zugrunde, ein Granulat auf unkomplizierte Weise zu schaffen, das in höchstem Masse saugfähig ist ohne an seiner Oberfläche filzig zu sein, womit seine Schütteigenschaften gewährleistet sind, sowie ein Verfahren und eine Vorrichtung zur Herstellung des Granulates anzugeben.

Das erfindungsgemässe Granulat zeichnet sich nach dem Wortlaut des kennzeichnenden Teils von Anspruch 1 aus. Durch Vorsehen einer Schicht eines Bindemittels und zwar klar bevorzugt eines hydraulischen Bindemittels, auf den im wesentlichen aus Zellulosefasern bestehenden Granulen, wird deren Oberfläche relativ hart ohne dass das Volumensaugverhalten wesentlich beeinträchtigt würde. Damit ist das obgenannte Problem des filzartigen Verhängens von Granulen zu Klumpen behoben und ein ausgezeichnet schüttfähiges Granulat wird erhalten. Bevorzugterweise werden, als Zellulosefasern nach dem Wortlaut von Anspruch 2, Papierfasern eingesetzt, vorzugsweise gewonnen aus Altpapier oder Papierschlamm, welch letzterer in der Papierindustrie in grossen Mengen als schwer zu entsorgender Abfall entsteht.

Durch Vorsehen eines Silikatzusatzes nach dem Wortlaut von Anspruch 3 kann das Absorptionsvermögen und das Granulengewicht gesteuert werden: Je mehr Silikat beigefügt wird, desto geringer wird das Absorptionsvermögen und desto grösser wird das Granulengewicht. Je nach Anwendung des Granulates kann mithin Gewicht und Absorptionsvermögen eingestellt werden.

Nach dem Wortlaut von Anspruch 4 wird bevorzugterweise als hydraulisches Bindemittel im wesentlichen CaSO₄ bis CaSO₄ 1/2 H₂O, d.h. Anhydrit bis Baugips eingesetzt, gegebenenfalls zusätzlich oder im wesentlichen ausschliesslich auch Weisszement. Durch erfindungsgemässes Vorsehen einer Schicht eines hydraulischen Bindemittels ist es im weiteren möglich, gemäss Wortlaut von Anspruch 5, die Farbe der Granulen durch Einfärben des hydraulischen Bindemittels im wesentlichen vorzugeben, was beispielsweise ermöglicht unterschiedliche erfindungsgemässe Granulate, beispielsweise mit unterschiedlichen Zusätzen, welche sich nicht in der Farbgebung manifestieren, durch das erwähnte Einfärben optisch manifest zu machen.

Gemäss Wortlaut von Anspruch 6 besteht eine weitere Möglichkeit zur Ausbildung des hydraulischen Bindemittels darin diese aus CaCO₃ ausgebildeten und hierzu Ca(OH)₂ in einer CO₂-Atmosphäre härten zu lassen, was sich aber aus wirtschaftlichen Gründen nur in Spezial-Fällen aufdrängt. Um die Oberflächenbeschaffenheit des erfindungsgemässen Granulates weiter zu verbessern kann nach dem Wortlaut von Anspruch 7 auf der Schicht des vorzugsweise hydraulischen Bindemittels eine Kleberschicht vorgesehen sein, wie und vorzugsweise eine Fischkleisterschicht, wodurch Staubbildung völlig unterbunden wird.

Das erfindungsgemässe Granulat eignet sich vorzüglich als Tierstreugranulat und wird gemäss Anspruch 9 hierzu bevorzugterweise weiss eingefärbt. Es kann aber auch dank seiner hohen Absorptionsfähigkeit als sich ausgezeichnet schüttendes, sehr kostengünstig in grossen Mengen herstellbares Oelabsorbermaterial, wie für Oel auf Wasser, eingesetzt werden. Wird das erfindungsgemässe Granulat als Tierstreugranulat eingesetzt so kann nach dem Wortlaut von Anspruch 11 ein Desinfektionsmittel und/oder ein Duftstoff zugefügt sein. Im weiteren können nach Anspruch 8 die Zellulosefasern aus Holzmehl bestehen oder Holzmehl umfassen.

Zur Lösung der genannten Aufgabe zeichnet sich das erfindungsgemässe Herstellverfahren nach dem kennzeichnenden Teil von Anspruch 12 aus. Die Bildung der feuchten Masse aus Zellulosefasern erfolgt dabei nach dem Wortlaut von Anspruch 13 bevorzugterweise durch Zerfasern von Papier unter Wasserbeigabe, vorzugsweise unter Beigabe von 70 - 80 Gew.% Wasser und/oder durch Verwendung von Papierschlamm, welcher je nach seinem Wassergehalt entwässert oder dem zusätzlich Wasser beigefügt wird. Bevorzugte Ausführungsvarianten des erfindungsgemässen Verfahrens sind in den weiteren Ansprüchen 14 - 18 spezifiziert.

Die Erfindung wird anschliessend anhand von Figuren erläutert.

Es zeigen:
- Fig. 1: schematisch einen Querschnitt durch ein erfindungsgemässes Granulat,
- Fig. 2: ein Funktionsdiagramm einer erfindungsgemässen Vorrichtung zur Herstellung des erfindungsgemässen Granulates mit zur Erläuterung des grundsätzlichen Herstellungsverfahrens,

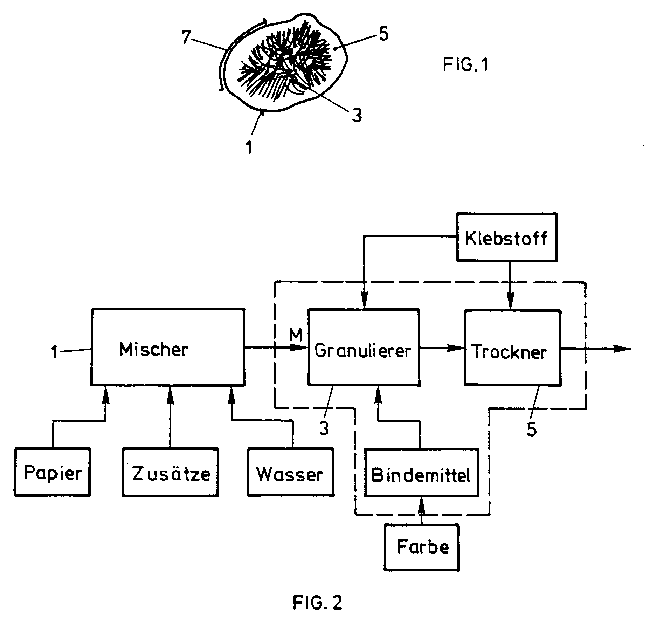

In Fig. 1 ist schematisch ein erfindungsgemässes Granul 1 dargestellt. Es besteht in seinem Kern aus Zellulosefasern 3, bevorzugterweise aus Papierfasern, sei dies aus Papier gewonnen oder aus Papierschlamm. Die Zellulosefasern im Kern 3 können auch Holzmehl umfassen. Auf dem Zellulosefasernkern ist eine Schicht eines Bindemittels 5 vorgesehen, weit bevorzugt eines hydraulischen, vorzugsweise aus Gips CaSO₄ und/oder aus Weisszement, gegebenenfalls aber auch aus CaCO₃. Je nach Einsatz ist das hydraulische Bindemittel eingefärbt, so, beispielsweise für den Einsatz des erfindungsgemässen Granulates als Tierstreu, weiss. Diese Einfärbung kann die Verwendung und den gegebenenfalls zugefügten Zusatzstoff optisch sichtbar machen. Für den Einsatz als Tierstreugranulat kann im weiteren im Kern 3 ein Desinfektionsstoff und/oder ein Duftstoff, möglichweise auch in der Bindemittelschicht, vorgesehen sein. Im weiteren kann der Kern 3 nebst Zellulosefasern ein Silikat umfassen, wobei das Gewicht der Granulen mit zunehmendem Silikatgehalt zunimmt, dabei aber deren Absorptionsvermögen abnimmt und umgekehrt. Ohne Silikat im Kern und mit Gips-Schicht 5 wurde ein Absorptionsvermögen von 130 Gew.% erreicht.

Um ein allfälliges Stäuben der Bindemittelschicht 5 gänzlich zu beheben kann, wie in einem Abschnitt 7, in Fig. 1 dargestellt, zusätzlich eine Klebemittelschicht aufgebracht sein, vorzugsweise aus Fischkleister.

In Fig. 2 ist anhand eines Funktionsblockdiagrammes der prinzipielle Aufbau einer erfindungsgemäss eingesetzten Anlage zur Herstellung des erfindungsgemässen Granulates dargestellt. Dabei ist gestrichelt derjenige Teil der Anlage umrahmt, welcher zwingend vorgesehen sein muss. Er umfasst eine Granulierstufe 3, welcher eingangsseitig bei M feuchte Masse von Zellulosefasern, gegebenenfalls mit Zusätzen, zugeführt wird. Dem Granulierer wird weiter mindestens das Bindemittel zugeführt, vorzugsweise das hydraulische Bindemittel. In der Granulierstufe 3, worin die feuchte Masse in zu granulierende Teilchen proportioniert wird und diese dann auch granuliert werden, wird, wie erwähnt, während des Granulierens, das Bindemittel, vorzugsweise Gips oder gegebenenfalls Ca(OH)₂ zugefügt, wobei in letzterwähntem Fall zusätzlich CO₂-Gas zugeführt wird, um mit dem Kalzium-Hydrat zu reagieren. Beim Einsatz von Gips bzw. eines hydraulischen Bindemittels ist das Zufügen einer weiteren Substanz nicht nötig. Nachdem die Granulen mit der, mit dem Bindemittel gebildeten Schicht, erstellt sind werden sie einer Trocknerstufe 5 zugeführt.

Wird Papierschlamm in der geeigneten Feuchtigkeit eingesetzt so kann dieser direkt der Eingabe M der Granulierstufe 3 zugeführt werden. In Fig. 2 ist nun, für die Verwendung von Papier, eine dann zu verwendende Mischerstufe 1 dargestellt, welche einen Zerfaserer umfasst, und der Papier sowie Wasser und gegebenenfalls Silikat und/oder Desinfektions- und/oder Duftstoffe zugefügt werden.

Wie aus Fig. 2 weiter ersichtlich kann dem vorzugsweise hydraulischen Bindemittel ein Farbstoff zugefügt werden und es kann, vorzugsweise im Granulierer 3 nach der Einspeisung und teilweise Abbindung des Bindemittels, gegebenenfalls auch erst in der Trocknerstufe, wie in Fig. 2 auch eingetragen, Klebstoff wie bevorzugterweise Fischkleister, auf die Granulen gesprüht werden. Anstelle der Papierfasern oder als Zusatz kann auch Holzmehl der Granulierstufe 3 zugeführt werden.

Durch Vorsehen der Schicht des vorzugsweise hydraulischen Bindemittels am erfindungsgemässen Granulat mit der in Fig. 2 schematisch dargestellten Anlage wird erreicht, dass es oberflächlich, ähnlich einem Ei, eine relativ harte Schale aufweist die aber feuchtigkeitsdurchlässig ist, wogegen sein Kern ausserordentlich absorptionsfähig bleibt.

Die Bestäubung der Granulen mit dem Gips-Pulver nach dem Zerschlagen der feuchten Masse in grob vorgeformten Granulen ergibt, dass die Gipsschicht, wie anhand von Fig. 1 gezeigt wurde, sich nur im wesentlichen aussen aufbaut und das Volumeninnere der Granulen durch im wesentlichen freiliegende, vernestete Zellulosefasern gebildet bleibt, was die hohe Saugfähigkeit der fertiggestellten Granulen sicherstellt.

Durch die eingedüste Warmluft wird die Granuleoberfläche bzw. die sich gebildete Gipsschicht angetrocknet und damit die runde Form der Granulen bereits stabilisiert. Das Granulat tritt schliesslich als abgerundetes, angetrocknetes Granulat auf eine Trocknungseinrichtung, wie einen Bandtrockner. Vorzugsweise nach einem ersten Antrocknen, d.h. entweder und vorzugsweise an der stromabliegenden Partie, kann, wie schematisch dargestellt, eine weitere Ausgabeanordnung vorgesehen sein für einen vorzugsweise dünnflüssigen Klebstoff, wie Fischkleister, welche Ausgabevorrichtung beispielsweise mit einem Sprühnebel eine hauchdünne Kleberschicht auf die angetrocknete Gipsschicht aufsprüht. Damit kann, sofern notwendig, jegliche Staubbildung der Gipsschicht am fertig getrockneten Granulat unterbunden werden.

Das erfindungsgemässe Granulat ist wegen seiner Beschichtung als Schüttgut ausgezeichnet handhabbar und weist wegen seinem im wesentlichen aus Zellulosefasern bestehenden Kern eine hohe Saugfähigkeit auf. Das vorgestellte Herstellungsverfahren hierfür ergibt die Möglichkeit grosse Mengen des erfindungsgemässen Granulates industriell zu fertigen, welches sich ausgezeichnet als Oelabsorbergranulat eignet oder als Tierstreugranulat.

## Patentansprüche

1. Granulat, im wesentlichen bestehend aus Zellulosefasern, dadurch gekennzeichnet, dass die einzelnen Granülen (1) mit einem Kern (3) aus Zellulosefasern mit einer Schicht (5) eines Bindemittels versehen sind.

2. Granulat nach Anspruch 1, dadurch gekennzeichnet, dass die Zellulosefasern (3) Papierfasern, vorzugsweise gewonnen aus Altpapier oder Papierschlamm, umfassen.

3. Granulat nach einem der Ansprüche 1 oder 2, dadurch gekennzeichnet, dass den Zellulosefasern ein Silikat-Zusatz beigefügt ist als Absorptions- und Gewichtssteuermittel.

4. Granulat nach einem der Ansprüche 1 - 3, dadurch gekennzeichnet, dass das Bindemittel ein hydraulisches Bindemittel ist und im wesentlichen Gips-Anhydrit und/oder Weisszement umfasst.

5. Granulat nach einem der Ansprüche 1 - 4, dadurch gekennzeichnet, dass die Farbe der Granulen durch Einfärben des Bindemittels im wesentlichen gegeben ist.

6. Granulat nach einem der Ansprüche 1 - 5, dadurch gekennzeichnet, dass die Schicht CaCO₃ umfasst.

7. Granulat nach einem der Ansprüche 1 - 6, dadurch gekennzeichnet, dass auf der Schicht eine Klebeschicht (7), vorzugsweise eine Fischkleisterschicht, vorgesehen ist.

8. Granulat nach einem der Ansprüche 1 - 7, dadurch gekennzeichnet, dass die Zellulosefasern Holzmehl umfassen.

9. Verwendung des Granulates nach einem der Ansprüche 1 - 8, als Tierstreugranulat, wobei das Granulat vorzugsweise weiss eingefärbt ist.

10. Verwendung des Granulates nach einem der Ansprüche 1 - 8, als Oelabsorbermaterial, insbesondere bei Nachbehandlung mittels eines Hydrophobiermittels, wie eines Silikonharzes, zur Absorption von Oel auf Wasser.

11. Verwendung nach Anspruch 9, dadurch gekennzeichnet, dass das Granulat ein Desinfektionsmittel und/oder einen Duftstoff enthält.

12. Verfahren zur Herstellung eines Granulates nach Anspruch 1, bei welchem
- aus Zellulosefasern und Wasser eine feuchte Masse M gebildet wird,
die feuchte Masse zerkleinert wird und
die Teilchen feuchter Masse gerundet und kompaktiert werden, dadurch gekennzeichnet, dass
auf die Teilchen während dem Runden und Kompaktieren ein Bindemittel aufgebracht wird zur Bildung einer Aussenschicht und
die Teilchen mit der aufgebrachten Aussenschicht getrocknet werden.

13. Verfahren nach Anspruch 12, dadurch gekennzeichnet, dass die feuchte Masse durch Zerfasern von Papier und Wasserbeigabe, vorzugsweise mit 70 - 80 Gew.% oder durch Papierschlamm mit 70 - 80 Gew.% Wasser gebildet wird.

14. Verfahren nach einem der Ansprüche 12 oder 13, dadurch gekennzeichnet, dass der feuchten Masse ein Silikat beigemischt wird.

15. Verfahren nach einem der Ansprüche 12 - 14, dadurch gekennzeichnet, dass als Bindemittel zur Bildung der Aussenschicht Weissbeton und/oder Ca(OH)₂ und/oder CaSO₄-CaSO₄ 1/2 H₂O zugeführt wird, wobei im Falle des Zuführens von Ca(OH)₂ dies in einer CO₂-Atmosphäre geschieht zur Bildung einer CaCO₃ Schicht.

16. Verfahren nach einem der Ansprüche 12 - 15, dadurch gekennzeichnet, dass das Bindemittel eingefärbt wird.

17. Verfahren nach einem der Ansprüche 12 - 16, dadurch gekennzeichnet, dass als Zellulosefasern Holzmehl zugeführt wird.

18. Verfahren nach einem der Ansprüche 12 - 17, dadurch gekennzeichnet, dass nach dem Aufbringen des Bindemittels die Granulen mit einer Kleberschicht versehen werden, vorzugsweise mit einem dünnflüssigen Klebstoff besprüht werden, vorzugsweise mit einer Fischkleisterlösung.

## Claims

1. Granulated product consisting essentially of cellulose fibers, characterized in that the individual granules (1) with a core (3) of cellulose fibers are provided with a layer (5) of a binder.

2. Granulated product according to claim 1, characterized in that the cellulose fibers (3) include paper fibers preferably recovered from waste paper or paper slime.

3. Granulated product according to one of claims 1 or 2, characterized in that a silicate additive is added as an absorption and weight control means to the cellulose fibers.

4. Granulated product according to one of claims 1-3, characterized in that the binder is an hydraulic binder and essentially comprises gypsum anhydrite and/or white cement.

5. Granulated product according to one of claims 1-4, characterized in that the colour of the granules is essentially given by colouring of the binder.

6. Granulated product according to one of claims 1-5, characterized in that the layer comprises CaCO₃.

7. Granulated product according to one of claims 1-6, characterized in that an adhesive layer (7) preferably a layer of fish glue paste is provided on the layer.

8. Granulated product according to one of claims 1-7, characterized in that the cellulose fibers comprise wood meal.

9. Utilization of the granulated product according to one of claims 1-8 as a granulated litter product for animals, the granulated product being preferably coloured in white.

10. Utilization of the granulated product according to one of claims 1-8 as an oil absorbing material in particular for subsequent treatment by means of a waterproofing compound such as a silicone resin for the absorption of oil on water.

11. Utilization according to claim 9, characterized in that the granulated product contains a disinfectant and/or a fragrant substance.

12. Method of manufacture of a granulated product according to claim 1, wherein a moist body M is provided from cellulose fibers and water, the moist body is crushed and the particles of the moist body are rounded and compacted, characterized in that during the rounding and compacting a binder is applied upon the particles to form an outer layer and the particles together with the applied external layer are dried.

13. Method according to claim 12, characterized in that the moist body is provided by crushing paper and admixing water preferably at 70 - 80% by weight or by paper slime with 70 - 80% by weight of water.

14. Method according to one of claims 12 or 13, characterized in that a silicate is admixed with the moist body.

15. Method according to one of claims 12-14, characterized in that white concrete and/or Ca(OH)₂ and/or CaSO₄-CaSO₄ 1/2 H₂O are supplied as a binder for the formation of the outer layer, whereas in the case of the supply of Ca(OH)₂, this occurs in a CO₂-atmosphere for the formation of a layer of CaCO₃.

16. Method according to one of claims 12-15, characterized in that the binder is coloured.

17. Method according to one of claims 12-16, characterized in that wood meal is supplied as cellulose fibers.

18. Method according to one of claims 12-17, characterized in that after the applying of the binder, the granules are provided with a layer of adhesive, preferably are sprayed with a fluid adhesive preferably with a solution of fish glue paste.

## Revendications

1. Granulés se composant essentiellement de fibres de cellulose caractérisés en ce que les granulés individuels avec un noyau (3) en fibres de cellulose sont pourvus d'une couche (5) d'un agent liant.

2. Granulés selon la revendication 1, caractérisés en ce que les libres de cellulose (3) sont des fibres de papier, avantageusement récupérées de vieux papiers ou bien de boues de papier.

3. Granulés selon l'une quelconque des revendications 1 ou 2, caractérisés en ce que les fibres de cellulose sont additionnées d'un additif de silicate en tant qu'agent réglant l'absorption et le poids.

4. Granulés selon l'une quelconque des revendications 1-3, caractérisés en ce que l'agent liant est un agent liant hydraulique et il comporte essentiellement de l'anhydrite-plâtre et/ou du ciment blanc.

5. Granulés selon l'une quelconque des revendications 1-4 caractérisés en ce que la couleur des granulés est donnée essentiellement par coloration de l'agent liant.

6. Granulés selon l'une quelconque des revendications 1-5, caractérisés en ce que la couche contient CaCO₃.

7. Granulés selon l'une quelconque des revendications 1-3, caractérisés en ce que sur la couche est prévue une couche de colle (7), avantageusement une couche de colle de farine de poisson.

8. Granulés selon l'une quelconque des revendications 1-7, caractérisés en ce que les fibres de cellulose contiennent de la farine de bois.

9. Utilisation des granulés selon l'une quelconque des revendications 1-8 en tant que granulés à disperser pour animaux, les granulés étant préférentiellement colorés en blanc.

10. Utilisation des granulés selon l'une quelconque des revendications 1-8 en tant que matière absorbant l'huile, en particulier après post-traitement au moyen d'un agent hydrophobe tel qu'une résine de silicone pour l'absorption de l'huile sur l'eau.

11. Utilisation selon la revendication 3, caractérisée en ce que les granulés contiennent un agent désinfectant et/ou une matière odorante.

12. Procédé de production de granulés selon la revendication 1, où
on forme un masse unique M de fibres de cellulose et d'eau,
la masse humide est broyée, et
les particules de masse humide sont arrondies et tassées, caractérisé en ce que
sur les particules, pendant qu'on les arrondit et qu'on les tasse, est appliqué un agent liant pour la formation d'une couche externe et les particules sont séchées avec la couche externe qui y est formée.

13. Procédé selon la revendication 12, caractérisé en ce que la masse humide est formée par défibrage du papier et addition d'eau, avantageusement avec 70-80% en poids ou bien par de la boue de papier avec 70-80% en poids d'eau.

14. Procédé selon l'une des revendications 12 ou 13, caractérisé en ce que la masse humide est mélangée à un silicate.

15. Procédé selon l'une quelconque des revendications 12-14, caractérisé en ce qu'en tant qu'agent liant pour la formation de la couche externe, on ajoute du béton blanc et/ou Ca(OH)₂ et/ou CaSO₄-CaSO₄ 1/2 H₂O, dans le cas où l'on ajoute Ca(OH)₂, cela se produit dans une atmosphère de CO₂ pour la formation d'une couche de CaCO₃.

16. Procédé selon l'une quelconque des revendications 12-15, caractérisé en ce que l'agent liant est coloré.

17. Procédé selon l'une quelconque des revendications 12-16, caractérisé en ce qu'on ajoute, en tant que fibres de cellulose, de la farine de bois.

18. Procédé selon l'une quelconque des revendications 12-17 caractérisé en ce qu'après application de l'agent liant, les granulés sont pourvus d'une couche de colle, avantageusement pulvérisés d'une colle fluide, avantageusement d'une solution de colle de farine de poisson.
